# EUROPEAN PATENT APPLICATION

(11) **EP 4 722 051 A1**
(43) Date of publication of application: **08.04.2026**
(21) Application number: 25219780.1
(22) Date of filing: 01.12.2025
(51) Int. Cl.: B60R 25/30, B60R 25/31, B60R 25/10

(54) **ADVANCED ALARM SYSTEM FOR A MOTOR VEHICLE**

(30) Priority: 07.10.2024 IT 202400022245
(71) Applicant: FERRARI S.p.A., 41100 Modena (IT)
(72) Inventor: VITIELLO, Pasquale, 41100 MODENA (IT); TANZI, Alessandro, 41100 MODENA (IT); SUAIDEN, Eduardo, 41100 MODENA (IT); CENCIARINI, Claudia, 41100 MODENA (IT)
(74) Representative: Studio Torta S.p.A.

(57) **Abstract**

An alarm system, for a motor vehicle (1) having a bodywork (6) internally defining a passenger compartment (2), equipped with: a proximity monitoring unit (16), configured to monitor surroundings of the motor vehicle (1); and a processing unit (14), operatively coupled to the proximity monitoring unit (16) and configured to determine a pre-alarm condition upon detection of movement in the surroundings of the motor vehicle (1), based on information provided by the proximity monitoring unit (16). At least one sensor assembly (12) is solidly coupled to the bodywork (6) of the motor vehicle (1) to provide detection signals as a function of a contact or touch on the bodywork (6); the processing unit (14) is operatively coupled to the sensor assembly (12) and is configured, following the determination of the pre-alarm condition, to: acquire the corresponding detection signals and perform processing operations designed to recognize the contact or touch on the bodywork (6); and generate alarm signalling as a function of the recognition of the contact or touch.

## Description

### CROSS-REFERENCE TO RELATED APPLICATIONS

This patent application claims priority from Italian patent application no. 102024000022245 filed on October 7, 2024, the entire disclosure of which is incorporated herein by reference.

### TECHNICAL FIELD

This solution relates to an advanced alarm system for a vehicle, in particular a motor vehicle, and to a related method.

### PRIOR ART

As is well known, motor vehicles are generally equipped with intruder alarm systems.

These alarm systems, of a volumetric type, are configured to monitor the environment inside the vehicle (the passenger compartment) to detect intrusions and attempted theft. These systems generally rely on ultrasonic or microwave technology to implement this kind of volumetric monitoring.

Other known alarm systems provide, alternatively or in addition to the above-mentioned volumetric monitoring systems, an anti-lift detection, implemented by means of accelerometers or inclinometers.

Some recently manufactured vehicles are also equipped with systems for monitoring a volume around the vehicle (using one or more cameras coupled externally to the vehicle), aimed at detecting suspicious movements, so as to trigger appropriate alarm signals (for example, notifications sent to the vehicle owner).

Although efficient, the alarm solutions currently used are not always suitable for coping with the ever-changing security threats faced by vehicle owners.

### OBJECT OF THE INVENTION

The aim of the present solution is generally to provide an advanced vehicle alarm solution, being able to more comprehensively address the above-mentioned security threats.

In accordance with the purpose indicated above, according to this solution an alarm system and method, as defined in the attached claims, are provided.

### BRIEF DESCRIPTION OF THE FIGURES

This invention will now be described with reference to the accompanying drawings, which illustrate a non-limiting embodiment thereof, wherein:
- Figure 1 schematically shows a motor vehicle equipped with an advanced alarm system according to one embodiment of the present solution;
- Figure 2 is a general block diagram of the alarm system;
- Figure 3 shows, in partially exploded view, a vehicle body panel, "sensorized" by a respective sensor assembly; and
- Figure 4 is a flow diagram of operations performed by the alarm system, according to one aspect of the present solution.

### DETAILED DESCRIPTION OF THE EMBODIMENTS

As will be described in detail, one aspect of the present solution involves implementing an advanced alarm system that seamlessly and complementarily integrates standard antitheft solutions with innovative vehicle exterior monitoring and protection solutions.

This advanced alarm system is not only able to detect intruders inside the vehicle but also extends protection to the immediate surroundings of the vehicle. In this manner, the advanced alarm system generates an invisible shield around the vehicle, capable of alerting the owner (or other interested party) to potential threats or dangers, even before they can act on the vehicle. In other words, the advanced alarm system creates a 360° protection bubble around the vehicle, which not only reacts to potential threats, but may also anticipate and prevent such threats.

In particular, one aspect of the present solution provides for: one or more sensor assemblies to be integrally coupled with the vehicle and designed to detect contacts or touches on the vehicle body; and a control unit, coupled to the same sensor assemblies and configured to process the acquired signals to recognise the type of contact detected and distinguish, in particular, between lawful contacts and potentially dangerous contacts (that is, contacts constituting a potential threat).

In general, "touch" here means a direct contact between an external body and the vehicle body. These contacts may differ in, for example, intensity, duration and/or kind. In particular, an external body means either an animate body (a person or an animal) or an inanimate body (an object).

For example, the driver of the vehicle may represent such an external body and direct contact on the body may be achieved by pressure, tapping and/or rubbing exerted, for example, with the fingers of a hand by the same driver. An external body may also be an object or, in the case of use by a malign actor, a burglary tool acting on the body of the motor vehicle 1.

The alarm system is configured to implement algorithms to recognise and classify contacts or touches, in order to discriminate between "benign" interactions with the vehicle (for example, carried out by the driver or owner of the vehicle) and potentially dangerous interactions. By analysing contact or touch characteristics such as intensity, duration, pattern and/or position on the body, the system is able to trigger appropriate responses, which may range from simple notifications to the owner to active deterrents (for example, audible and/or visual alerts).

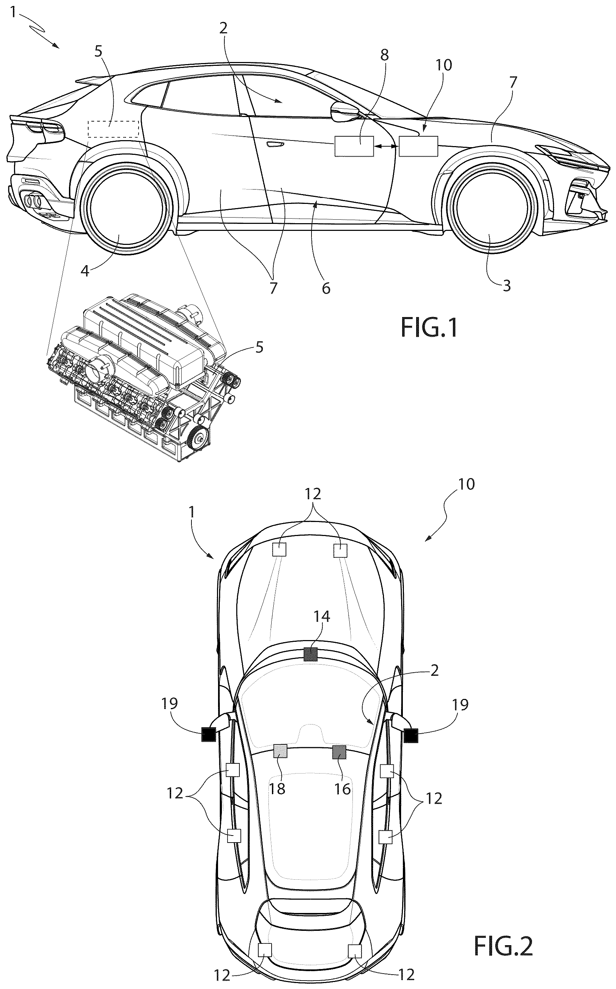

Figure 1 shows a vehicle, in particular a motor vehicle 1, provided with a passenger compartment 2 (configured to accommodate at least one driver and possibly one or more passengers), two front wheels 3 (thus belonging to the same, front axle) and two rear wheels 4 (thus belonging to the same, rear axle). At least one of these front or rear axles receives torque from a powertrain unit 5 (shown in the example in the rear position) of the motor vehicle 1, whether conventional, hybrid or electric.

The passenger compartment 2 is defined by a supporting structure of the motor vehicle 1, which comprises a body or bodywork 6, which forms the outer shell of the supporting structure and is fixed to the same supporting structure.

In a known manner, the bodywork 6 comprises multiple exterior panels 7 suitably shaped to form the profile and, as a whole, the aesthetic appearance of the motor vehicle 1.

The term panel 7 refers, in particular, to a body that covers a corresponding portion of the supporting structure. A panel 7 may be a laminar body, that is, a body generally having a reduced thickness relative to its width and/or height. The panels 7 may either be rigidly coupled to the supporting structure, or, in a known manner, be movable with at least a first degree of freedom with respect to the loadbearing structure (for example, doors, bonnet or trunk).

Each panel 7 has an outer surface and an inner surface. The outer surface faces the outside of the motor vehicle 1 and is shaped to form (generally in combination with other panels 7) the aerodynamic and aesthetic profile of the motor vehicle 1; the inner surface faces the passenger compartment 2 of the same motor vehicle 1.

In addition, the motor vehicle 1 comprises at least one electronic control unit (or "ECU") 8, which, among other functions, manages and controls the general operation of the motor vehicle 1 and of its main systems, including, for example, the powertrain unit 5, acting on the torque output, the transmission, the brakes, possibly in cooperation with other actuations on board the motor vehicle 1.

Physically, the electronic control unit 8 may consist of a single digital processing device (microprocessor, microcontroller or the like), or of several separate devices coupled together in communication, for example via the CAN network of the motor vehicle 1.

The motor vehicle 1 may also comprise additional control units, for example one or more VCUs (Vehicle Control Units), dedicated to controlling and monitoring devices/sensors on board the vehicle.

According to one aspect of the present solution, the motor vehicle 1 comprises an alarm system 10, configured to generate the above-mentioned 360° protection shield around the motor vehicle 1 and implement the advanced functionalities described above.

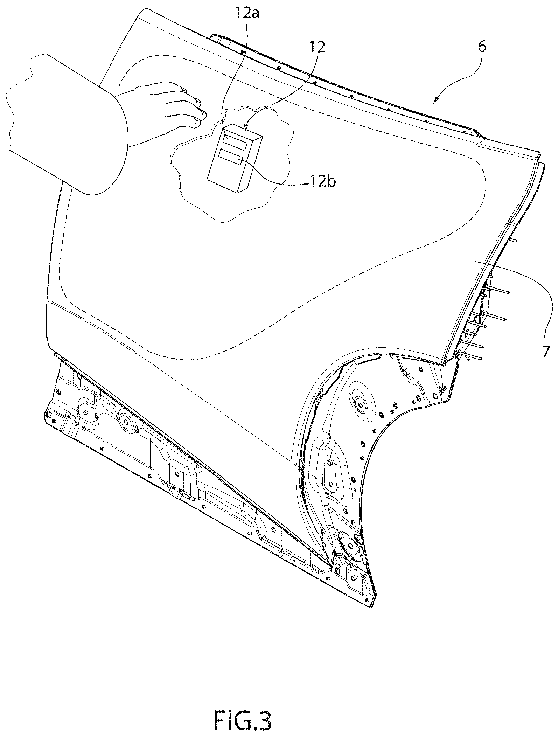

In particular, with reference to Figure 2, the alarm system 10 comprises: one or more sensor assemblies 12, integrally coupled to the bodywork 6 of the motor vehicle 1, in particular to a respective panel 7 (as also illustrated in Figure 3), and configured to output detection signals as a function of a contact or touch on the bodywork 6 (in Figure 3, by way of example, a contact occurring by means of a person's hand is shown); and a processing unit 14. The processing unit 14 is operatively coupled to the sensor assemblies 12 to acquire the respective detection signals and carry out appropriate processing operations of the same detection signals aimed at monitoring the safety of the motor vehicle 1.

In particular, the processing unit 14 may comprise a respective digital processing unit (microprocessor, microcontroller, FPGA or the like) and a non-volatile memory, in which information and processing instructions are stored to implement the above-mentioned processing operations. In a possible embodiment, the processing unit 14 may be part of, or may constitute, the above-mentioned electronic control unit 8 of the motor vehicle 1. Alternatively, this processing unit 14 may be a separate entity, preferably coupled in communication with the same electronic control unit 8.

In the embodiment illustrated in Figure 2, the above-mentioned processing unit 14 is located at the front of the passenger compartment 2, for example in the dashboard area.

According to one aspect of the present solution, each of the above-mentioned sensor assemblies 12 (as illustrated in Figure 3) comprises at least one first sensor element 12a capable of converting vibrations originating from contact or touch on the bodywork 6 into electric detection signals. In particular, this first sensor element 12a is a piezoelectric transducer, operating on the principle of piezoelectricity, that is, on the ability of piezoelectric materials to generate an electrical potential difference when subjected to mechanical deformation.

In particular, this first sensor element 12a implements an accelerometer and can advantageously be produced by means of microfabrication techniques of semiconductor materials, with MEMS (Micro-ElectroMechanical Systems) technology.

The advantage of using piezoelectric technology is that it ensures high robustness and, at the same time, requires very little power consumption, especially when using MEMS sensors (also in the light of efficient management of the signal processing and classification chain, as will be discussed in detail below).

In one advantageous implementation, each of the above-mentioned sensor assemblies 12 further comprises a second sensor element 12b, of a different type from the first sensor element 12a, for example (but not necessarily) a microphone configured to detect and convert acoustic waves generated by touching or contacting the bodywork 6 of the motor vehicle 1 into respective electric signals. This microphone can be of the capacitive or piezoelectric type and can advantageously be manufactured using MEMS technology.

The advantage of using two different types of sensor within the sensor assemblies 12 is that it allows for a lower false detection rate, for example, due to the possibility of misinterpreting purely acoustic stimuli as a contact or touch, while at the same time increasing performance with regard to the classification of the contacts or touches.

Advantageously, the alarm system 10 may comprise multiple of the above-mentioned sensor assemblies 12, suitably (for example, evenly) distributed around the bodywork 6 of the motor vehicle 1, so as to provide substantially complete (360°) coverage of the entire bodywork 6.

For example, and as depicted in Figure 1 above, the alarm system 10 may involve installing a pair of the above-mentioned sensor assemblies 12 on each of the sides (right side, left side, front side and rear side) of the bodywork 6 of the motor vehicle 1.

The advantage associated with using multiple sensor assemblies 12 is that it enables a more accurate determination of the location of the point of touch or contact on the bodywork 6 (information that may be useful for implementing advanced monitoring strategies).

In any case, the bodywork 6 advantageously shields and protects the sensor assemblies 12 that are not visible from outside the motor vehicle 1 and are protected from the external environment. In other words, the sensor assemblies 12 are arranged inside the bodywork 6, which is thus interposed between the outer body (which determines the contacts or touches) and the sensor assemblies 12.

In particular, the sensor assemblies 12 may be attached to a respective panel 7 of the bodywork 6, being, for example, installed between the respective panel 7 and the supporting structure of the motor vehicle 1, or, alternatively, being incorporated within the respective panel 7.

According to another aspect of the present solution, the alarm system 10 further comprises a proximity monitoring unit, in particular a radar radio-detection unit 16 (in the specific application operating at 60 GHz), configured to monitor the interior of the passenger compartment 2 (with a volumetric anti-intrusion function) and also the surroundings of (or zones or areas immediately surrounding) the motor vehicle 1, for example with a range of 1-1.5 m around the motor vehicle 1.

This radio-detection unit 16 may for example be installed, as depicted in Figure 2, in a panel or housing on the ceiling of the passenger compartment 2, near the forward or front portion of the passenger compartment 2 (usually known as an "Overhead Compartment" or OHC). Thus, the radio detection unit 16 has a field of vision that includes the interior of the passenger compartment 2 and also the areas immediately surrounding the motor vehicle 1.

The radio-detection unit 16 is conveniently operatively (wired or wirelessly) coupled to the processing unit 14, in order to exchange detection signals and control and configuration signals.

The alarm system 10 may also comprise an internal monitoring unit 18, configured to implement monitoring of the interior environment of the passenger compartment 2 of the motor vehicle 1 and the occupancy of that passenger compartment 2. This internal monitoring unit 18 can be conveniently installed inside the passenger compartment 2, in a position adjacent to the radio-detection unit 16, for example in the area above the central rear-view mirror (RVM) area.

The internal monitoring unit 18 is, for example, a standard RGB-IR camera, configured to work with both visible and infrared light, and is operatively (wired or wirelessly) coupled with the processing unit 14.

The alarm system 10 may also comprise one or more surrounding monitoring units 19, in particular including surround view cameras, configured to generate an area view of the motor vehicle 1, helping, in general, with parking and blind spot monitoring.

In the embodiment illustrated in Figure 2, the alarm system 10 comprises two surrounding monitoring units 19, installed at the wing mirrors of the motor vehicle 1.

The alarm system 10 may also comprise, or cooperate with, a GPS (Global Positioning System) unit, not illustrated herein, or similar satellite location unit, also operatively coupled to the processing unit 14.

According to one aspect of the present solution, this processing unit 14 is configured to implement algorithms to interpret the signals received from the various sensors and detection elements (in particular from the sensor assemblies 12, the radio-detection unit 16, the internal monitoring unit 18, the surrounding monitoring units 19 and the GPS unit), process these signals in a joint manner (using "sensor fusion" techniques) and generate vehicle-level information sets that can be used for monitoring the safety of the motor vehicle 1.

In these algorithms, which may include, for example, feature extraction algorithms, frequency spectra analysis algorithms, "machine learning" algorithms, the signals from the various sensors (in particular from the sensor assemblies 12 and the radio-detection unit 16) play a specific role in the final monitoring result, working together to provide a robust safety monitoring solution for the motor vehicle 1. In particular, the processing unit 14, through the joint processing of these signals, is configured to trigger realtime notifications and alarm actions aimed at maintaining the safety of the motor vehicle 1.

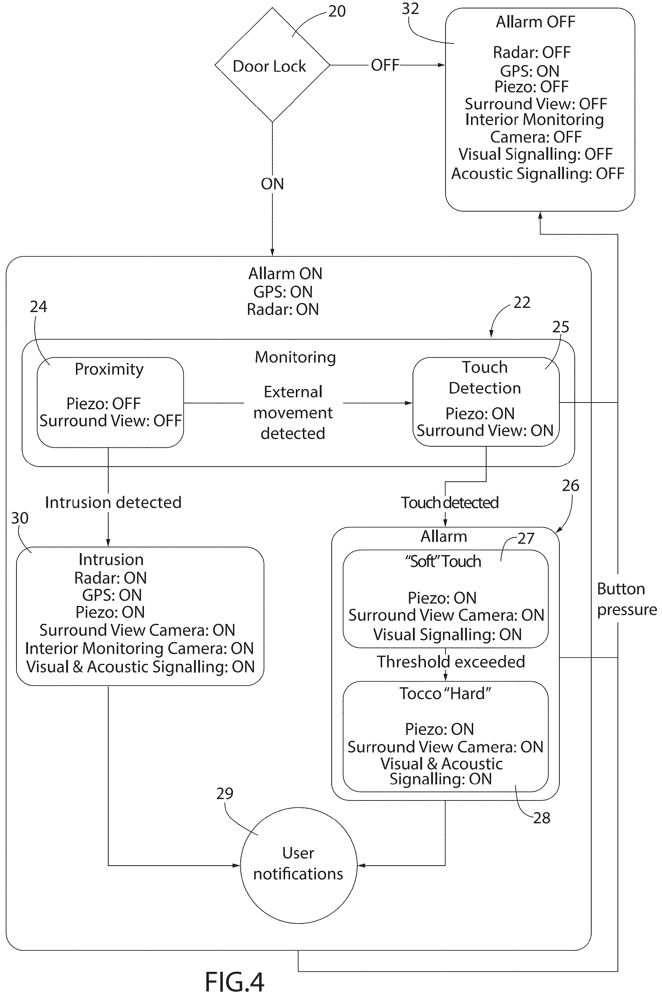

With reference to Figure 4, the operations performed by the processing unit 14 to implement monitoring of the safety conditions of the motor vehicle 1 are described in more detail.

In particular, as shown in block 20, monitoring is activated from the moment the processing unit 14 detects the locking or closing of the doors (so-called "door lock") of the motor vehicle 1 by the driver (or key holder of the same motor vehicle 1).

Following the monitoring activation, the radio-detection unit 16 first starts operating to implement monitoring of the surroundings of motor vehicle 1, as shown in block 22.

In this initial condition, the radio-detection unit 16 is, therefore, active, as is the GPS unit.

In particular, the processing unit 14 implements, as shown in block 24, proximity monitoring aimed at detecting movements in the vicinity of the motor vehicle 1 by means of the radio-detection unit 16. At this stage, the ("piezo") sensor assemblies 12 are turned-off (off), as are the internal monitoring unit 18 and the surrounding monitoring units 19.

Following the detection of movement in the vicinity of the motor vehicle 1 (which results in a pre-alarm condition), the sensor assemblies 12, at block 25, are activated and the surrounding monitoring units 19 are also activated, for a phase in which the processing unit 14 implements monitoring aimed at detecting touches or contacts on the bodywork 6 of the motor vehicle 1.

In particular, it should be noted that the preliminary monitoring of the surroundings of the motor vehicle 1 means it is possible to keep the monitoring of touch or contact on the bodywork 6 disabled until the time in which this monitoring actually becomes relevant, thus saving energy (this functionality is particularly important, since monitoring typically has to be carried out for even prolonged periods) .

In parallel to this monitoring, the same processing unit 14 is configured to implement at the same time further monitoring aimed at detecting possible intrusions inside the passenger compartment 2 of the motor vehicle 1 by means of the same radio-detection unit 16.

As soon as a touch or contact is detected on the bodywork 6, as indicated in block 26, the processing unit 14 is configured to implement appropriate algorithms based on the detection signals provided by the sensor assemblies 12 and aimed at determining the type of touch or contact that has occurred (for example, according to the kind, intensity, pattern or position of the contact), distinguishing, in particular, between weak ("soft") and strong ("hard") touches or contacts.

In particular, a "strong" touch or contact represents an event having significantly greater intensity, duration or other distinguishing characteristics with respect to the same characteristics of a "weak" touch or contact.

For this purpose, the processing unit 14 can execute appropriate "machine learning" algorithms, trained at a previous phase. For example, these algorithms may be able to correctly classify various types of contact, such as "touch", "scratch", "key", "collision".

If a weak contact is recognised, as shown in block 27, the processing unit 14 determines a potentially but not immediately dangerous situation and can be configured to trigger visual signalling, for example, by flashing turn indicators or the like.

If, on the other hand, a strong contact is recognised, as shown in block 28, the processing unit 14 determines a situation of actual and immediate danger and can be configured to trigger visual and also acoustic signalling, for example, by flashing turn indicators or the like and activating the horn and/or an alarm siren.

Furthermore, as indicated in block 29, the processing unit 14 is configured to send notifications to the owner of the motor vehicle 1 (or other interested party), using, for example, the connectivity systems of the motor vehicle 1. These notifications may for example contain information on the event that caused the alarm and position information of the motor vehicle 1 (obtained via the GPS unit).

As discussed above, in parallel with touch or contact monitoring on the bodywork 6 of the motor vehicle 1, the processing unit 14 may advantageously be configured to implement intrusion monitoring inside the passenger compartment 2 of the motor vehicle 1.

In particular, as indicated in block 30, following the detection of an intrusion by the radio-detection unit 16, the processing unit 14 activates the sensor assemblies 12, the internal monitoring unit 18 and the surrounding monitoring units 19. It also activates the visual and sound signalling.

As indicated in block 29 (and as discussed above), the processing unit 14 is then configured to send alarm notifications addressed to the owner of the motor vehicle 1 (or other interested party).

In addition, at any time, pressing of the alarm disable button on the key of the motor vehicle 1 (or similar control tool, for example implemented by means of an application on a smartphone or other mobile electronic device) brings the alarm system 10 into a disabled condition, as shown in block 32, in which in particular the sensor assemblies 12, the radio-detection unit 16, the internal monitoring unit 18 and the surrounding monitoring units 19 are disabled.

The advantages that the present solution allows to achieve are clear from what has been discussed.

In any case, it is again emphasised that the described alarm system allows to overcome the limitations associated with conventional alarms, by combining conventional volumetric monitoring with an advanced system for detecting and classifying touches or contacts on the bodywork for motor vehicle protection.

Advantageously, such a touch detection system can be "woken up" only when needed, after a potential danger has been detected, in the example discussed represented by movement in the surroundings of the motor vehicle. This feature reduces the energy consumption of the alarm system, making it effectively comparable to a conventional alarm system.

The sensor assemblies, based on piezoelectric operation, can detect even the smallest touches on the motor vehicle bodywork and also accurately detect the specific contact area or position (as well as the nature of the contact), thus providing important information for monitoring motor vehicle safety.

Lastly, it is clear that modifications and variations may be made to that described herein without departing from the scope of the present invention, as set forth in the claims.

In particular, it is emphasised that the solution described can be advantageously applied within a vehicle, regardless of the type of vehicle.

In addition, it should be noted that the type and number of sensors used in the alarm system 10 may differ from what is shown. For example, different types of contact sensors could be used, for example capacitive sensors or sensors based on other, different sensing modes.

## Claims

1. An alarm system (10), for a motor vehicle (1) having a bodywork (6) internally defining a passenger compartment (2), comprising:
a proximity monitoring unit (16), configured to monitor surroundings of the motor vehicle (1); and
a processing unit (14), operatively coupled to the proximity monitoring unit (16) and configured to determine a pre-alarm condition upon detection of movement in the surroundings of the motor vehicle (1), based on information provided by said proximity monitoring unit (16),
further comprising at least one sensor assembly (12) solidly coupled to the bodywork (6) of the motor vehicle (1) and configured to provide detection signals as a function of a contact or touch on the bodywork (6),
wherein said processing unit (14) is operatively coupled to the sensor assembly (12) and is configured, following the determination of the pre-alarm condition, to: acquire the corresponding detection signals and perform processing operations designed to recognize the contact or touch on the bodywork (6); and generate alarm signalling as a function of the recognition of said contact or touch.

2. The system according to claim 1, wherein said proximity monitoring unit (16) comprises a radio-detection unit (16), of a radar-type, configured to monitor, in addition to the surroundings of the motor vehicle (1), the interior of the passenger compartment (2) with a volumetric anti-intrusion function.

3. The system according to claim 1 or 2, wherein said sensor assembly (12) comprises at least one first sensor element (12a), of a piezoelectric type, configured to convert vibrations originated by the contact or touch on the bodywork (6) of the motor vehicle (1) into electrical detection signals.

4. The system according to claim 3, wherein said sensor assembly (12) further comprises a second sensor element (12b), defining a microphone, configured to detect and convert acoustic waves generated by the contact or touch on the bodywork (6) of the motor vehicle (1) into respective electrical detection signals.

5. The system according to any one of the preceding claims, comprising a plurality of said sensor assemblies (12), integrally coupled to the bodywork (6) of the motor vehicle (1), uniformly distributed around said bodywork (6).

6. The system according to any one of the preceding claims, wherein said processing unit (14) is configured to recognize distinctive characteristics of said contact or touch, including one or more of intensity, duration, pattern and position relative to the bodywork (6), and generate said alarm signalling according to said characteristics.

7. The system according to any one of the preceding claims, wherein said processing unit (14) is configured to perform recognition of a first type of touch, as a result of which visual-type alarm signalling is activated; and a second type of touch, as a result of which visual and additionally acoustic-type alarm signalling is activated.

8. The system according to any one of the preceding claims, wherein said processing unit (14) is configured to implement machine-learning-based algorithms for recognition of said contact or touch.

9. The system according to any one of the preceding claims, wherein said processing operations designed to recognize the contact or touch on the bodywork (6) of the motor vehicle (1) as a function of the detection signals acquired by the sensor assembly (12) are enabled only following the determination of the pre-alarm condition.

10. The system according to any one of the preceding claims, wherein said processing unit (14) is configured to implement, in parallel to the detection of the contact or touch on the bodywork (6), a further monitoring designed to detect intrusions inside the passenger compartment (2) of the motor vehicle (1) by means of said first monitoring unit (16) .

11. The system according to claim 10, further comprising an internal monitoring unit (18) configured to implement monitoring of the environment within the passenger compartment (2) of the motor vehicle (1); wherein said processing unit (14) is configured to activate said internal monitoring unit (18) following detection of an intrusion within the passenger compartment (2) of the motor vehicle (1) by means of said first monitoring unit (16).

12. The system according to claim 11, further comprising one or more surrounding monitoring units (19), including respective cameras, configured to capture an area around the motor vehicle (1); wherein said processing unit (14) is configured to activate said surrounding monitoring units (19) following detection of intrusion within the passenger compartment (2) of the motor vehicle (1) and following recognition of a contact or touch on the bodywork (6).

13. A motor vehicle (1), comprising an alarm system (10) according to any one of the preceding claims.

14. An automotive control software storable in, and executable by, at least one processing unit (14) of a motor vehicle (1), to cause, when executed, the processing unit (14) to become configured to implement the alarm system (10) according to any one of claims 1-12.

15. An alarm method, for a motor vehicle (1) having a bodywork (6) internally defining a passenger compartment (2), comprising:
monitoring surroundings of the motor vehicle (1); and
determining a pre-alarm condition following the detection of movement in the surroundings of the motor vehicle (1),
further comprising, following the determination of the pre-alarm condition:
recognizing the presence of a contact or touch on the bodywork (6) of the motor vehicle (1); and
generating alarm signalling as a function of the recognition of said contact or touch.
